# EUROPÄISCHE PATENTSCHRIFT

(11) **EP 1 268 206 B1**
(45) Veröffentlichungstag und Bekanntmachung des Hinweises auf die Patenterteilung: **09.03.2005**
(21) Anmeldenummer: 01909595.9
(22) Anmeldetag: 10.01.2001
(51) Int. Cl.: B32B 27/36

(54) **MATTE, UV-STABILE, KOEXTRUDIERTE POLYESTERFOLIE, VERFAHREN ZU IHRER HERSTELLUNG UND IHRE VERWENDUNG**
MATT, UV-STABLE, CO-EXTRUDED POLYESTER FILM, A METHOD FOR THE PRODUCTION THEREOF AND THE USE OF THE SAME
FEUILLE POLYESTER MATTE, STABLE AUX U.V., COEXTRUDEE, SON PROCEDE DE REALISATION ET SON UTILISATION

(30) Priorität: 20.01.2000 DE 10002178
(43) Veröffentlichungstag der Anmeldung: 02.01.2003
(73) Patentinhaber: Mitsubishi Polyester Film GmbH, 65203 Wiesbaden (DE)
(72) Erfinder: MURSCHALL, Ursula, 55283 Nierstein (DE); KERN, Ulrich, 55218 Ingelheim (DE); CRASS, Günther, 65232 Taunusstein (DE); HILKERT, Gottfried, 55291 Saulheim (DE)
(74) Vertreter: Schweitzer, Klaus, Dr.
(86) Internationale Anmeldenummer: PCT/EP2001/000213
(87) Internationale Veröffentlichungsnummer: WO 2001/053091

(56) Entgegenhaltungen:
- EP-A- 0 584 044
- EP-A- 0 587 148
- EP-A- 0 976 548
- US-A- 5 073 435

## Beschreibung

Die Erfindung betrifft weiterrrrrhin ein Verfahren zur Herstellung der Folie und ihre Verwendung.

Die Erfindung betrifft eine Koextrudierte, biaxial orientierte Polyesterfolie, bestehend aus einer Basisschicht die zu mindestens 70 Gew.-% aus einem thermoplastischen Polyester besteht,
und mindestens einer Deckschicht, wobei die Folie einen UV-Stabilisator enthält, der ausgewählt ist aus 2-Hydroxybenzotriazolen, Triazinen und Mischungen aus diesen und wobei die Gesamtkonzentration an Lichtsekutzmitteln zwischen 0.01 und 5 Gew. -% liegt, bezogen auf das Gewicht an kristallisierbarem Polyethylenterephthalat, und eine matte Deckschicht aufweist, die eine Mischung und/oder ein Blend aus zwei Komponenten I und II enthält, wobei die Komponente I im wesentlichen ein Polyethylenterephthalat-Homopolymer oder Polyethylenterephthalat Copolymer oder eine Mischung aus Polyethylenterephthalat-Homopolymer oder Polyethylenterephthalat Copolymeren ist und die Komponente II ein Copolyester ist aus mindestens 65 Mol-% Isophthalsäure als Säurekomponente, ggf. aliphatische Dicarbonsäure, Sulfomonomeres, das eine Metallsulfonatgruppe an dem aromatischen Teil einer aromatischen Dicarbonsäure enthält, und aliphatisches oder cycloaliphatisches Glykol. Die Erfindung betrifft weiterhin ein Verfahren zur Herstellung der Folie und ihre Verwendung.

Die Komponente I der Mischung bzw. des Blends ist ein Polyethylenterephthalat-Homopolymer oder Polyethylenterephthalat-Copolymer oder eine Mischung aus Polyethylenterephthalat Homo- oder Copolymeren.

Die Komponente II der Mischung bzw. des Blends ist ein Polyethylenterephthalat-Copolymer, welches aus dem Kondensationsprodukt der folgenden Monomeren bzw. deren zur Bildung von Polyestern befähigten Derivaten besteht: Isophthalsäure, aliphatische Dicarbonsäure; Sulfomonomeres, die eine Metallsulfonatgruppe an dem aromatischen Teil einer aromatischen Dicarbonsäure enthält und aliphatisches oder cycloaliphatisches Glykol.

Die erfindungsgemäße Deckschicht zeichnet sich durch eine charakteristische matte Oberfläche bzw. Optik aus und ist für die Verwendung als Verpackungsfolie oder für Anwendungen im industriellen Sektor gut geeignet, wo insbesondere ein UV-Schutz bzw. eine nicht Durchlässigkeit des UV-Lichtes gefordert wird.

Die Verpackungsindustrie hat einen hohen Bedarf an transparenten, hochglänzenden Kunststoffolien, wie z.B. biaxial orientierten Polypropylen- oder biaxial orientierten Polyesterfolien. Daneben besteht in zunehmendem Maße ein Bedarf an solchen Folien, bei denen ein Schutz vor ultravioletter Strahlung gegeben ist und bei denen zumindest eine Oberflächenschicht nicht hochglänzend ist, sondern sich durch ein charakteristisches mattes Erscheinungsbild auszeichnet und dadurch z.B. der Verpackung ein besonderes attraktives und damit werbewirksames Aussehen und einen Schutz vor UV-Strahlung verleiht.

In der US 4,399,179 wird eine koextrudierte biaxial orientierte Polyesterfolie beschrieben, die aus einer transparenten Basisschicht und mindestens einer matten Schicht besteht, welche im wesentliche aus einem bestimmten Polyethylenterephthalat-Copolymer besteht und zudem inerte Partikel mit einem Durchmesser von 0,3 bis 20 µm in einer Konzentration von 3 bis 40 % enthält. Das spezielle Copolymer ist eine Verarbeitungshilfe, durch die die Viskosität der die inerten Partikel enthaltenen Schmelze herabgesetzt wird, so dass eine einwandfreie Extrusion dieser Schicht möglich ist. Die Mattheit der Folie wird durch Zugabe der inerten Partikel in die entsprechende Schicht erreicht.

In der EP 0 144 978 wird eine selbstragende orientierte Folie aus thermoplastischem Kunststoff beschrieben, welche auf wenigstens einer ihrer beiden Oberflächen eine durchgehende Polyesterbeschichtung trägt, die als wäßrige Dispersion auf die Folie vor dem letzten Streckschritt aufgebracht wird. Die Polyesterbeschichtung besteht aus einem Kondensationsprodukt von verschiedenen Monomeren, die zur Bildung von Polyestern befähigt sind, wie Isophthalsäure, aliphatische Dicarbonsäuren, Sulfomonomere und aliphatische oder cycloaliphatische Glykole.

In der EP-A 0 620 245 sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern sei, ist dieser Schrift jedoch nicht zu entnehmen.

In den beschriebenen Fällen finden sich keine Hinweise darauf, wie einer Folie zumindest auf einer Folienoberfläche ein niedriger Glanz bei einer weiterhin hoher Transparenz der Folie verliehen werden kann und wie die Folie das UV-Licht absorbieren könnte und somit eine hohe UV-Stabilität aufweisen würde.

Aufgabe der vorliegenden Erfindung war es deshalb, eine koextrudierte biaxial orientierte und transparente Polyesterfolie mit mindestens einer matten Deckschicht zur Verfügung zu stellen, die sich einfach und wirtschaftlich herstellen läßt, die die guten physikalischen Eigenschaften der bekannten Folien besitzt, keine Entsorgungsprobleme verursacht und sich insbesondere durch die Absorption des UV-Lichtes und durch eine hohe UV-Stabilität auszeichnet.

Gelöst wird die Aufgabe durch eine koextrudierte und biaxial orientierte Polyesterfolie der eingangs genannten Gattung, deren kennzeichnende Merkmale darin bestehen, dass die Folie mindestens einen UV-Stabilisator enthält, wobei der UV-Stabilisator mittels Masterbatch-Technologie zudosiert wird und eine matte Deckschicht aufweist, die eine Mischung bzw. ein Blend aus zwei Komponenten I und II enthält.

Die Komponente I der Mischung bzw. des Blends ist ein Polyethylenterephthalat-Homopolymer oder Polyethylenterephthalat-Copolymer oder eine Mischung aus Polyethylenterephthalat Homo- oder Copolymeren.

Die Komponente II des Copolymers oder der Mischung bzw. des Blends ist ein Polymer, enthaltend mindestens eine Sulfonatgruppe, insbesondere ein Kondensationsprodukt der folgenden Monomeren bzw. deren zur Bildung von Polyestern befähigten Derivaten:
A) 65 bis 95 Mol-% Isophthalsäure;
B) 0 bis 30 Mol-% wenigstens einer aliphatische Dicarbonsäure vorzugsweise mit der Formel

   HOOC(CH₂)ₙCOOH

   wobei
   n im Bereich von 1 bis 11 liegt;
C) 5 bis 15 Mol-% wenigstens eines Sulfomonomeren enthaltend eine Alkalimetallsulfonatgruppe an dem aromatischen Teil einer Dicarbonsäure;
D) die zur Bildung von 100 Mol-% Kondensat notwendige stöchiometrische Menge eines copolymerisierbaren aliphatischen oder cycloaliphatischen Glykols vorzugsweise mit 2 bis 11 Kohlenstoffatomen;
wobei die Prozentangaben jeweils bezogen sind auf die Gesamtmenge der die Komponente II bildenden Monomeren.

Eine hohe UV-Stabilität bedeutet, dass die Folien durch Sonnenlicht oder andere UV-Strahlung nicht oder nur extrem wenig geschädigt werden, so dass sich die Folien für Außenanwendungen und/oder kritische Innenanwendungen eignen. Insbesondere sollen die Folien bei mehrjähriger Außenanwendungen nicht vergilben, keine Versprödungen oder Rißbildung der Oberfläche zeigen und auch keine Verschlechterung der mechanischen Eigenschaften aufweisen. Hohe UV-Stabilität bedeutet demnach, dass die Folie das UV-Licht absorbiert und Licht erst im sichtbaren Bereich durchläßt.

Zu den guten mechanischen Eigenschaften zählt unter anderem eine hoher E-Modul (E_{MD} > 3200 N/mm²; E_{TD} > 3500 N/mm²) sowie gute Reißfestigkeitswerte (in MD > 100 N/mm²; in TD > 130 N/mm²).

Zu der guten Verstreckbarkeit zählt, dass sich die Folie bei ihrer Herstellung sowohl in Längs- (MD) als auch ich Querrichtung (TD) hervorragend und ohne Abrisse orientieren läßt.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepreßte Formkörper kleiner Größe, z.B. linsen-oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die jeweiligen Komponenten I und II in Granulatform jeweils für sich getrennt dem Extruder für die erfindungsgemäße Deckschicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten I und II, welcher nicht mehr in die ursprünglichen Bestandteilen zerlegt werden kann. Ein Blend weist Eigenschaften wie ein homogener Stoff auf und kann entsprechend durch geeignete Parameter charakterisiert werden.

Erfindungsgemäß ist die Folie zumindest zweischichtig. Sie umfaßt dann als Schichten eine Schicht B (=Basisschicht) und die erfindungsgemäße Deckschicht A. In einer bevorzugten Ausführungsform der Erfindung ist die Folie dreischichtig aufgebaut und weist auf der einen Seite der Schicht B die Deckschicht A und auf der anderen Seite der Schicht B eine weitere Schicht C auf. In diesem Fall bilden die beiden Schichten A und C die Deckschichten A und C. Erfindungsgemäß kann der UV-Stabilisator in der/den Deckschicht(en) und/oder der Basisschicht enthalten sein.

Die Basisschicht B der Folie besteht bevorzugt zu mindestens 70 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-E inheiten oder aus Ethylenglykol-und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren. Geeignete andere aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenylx,x'-dicarbonsäuren (insbesondere Biphenyl-4,4'-dicarbonsäure), Diphenylacetylen-x,x'dicarbonsäuren (insbesondere Diphenylacetylen-4,4'-dicarbonsäure) oder Stilben-x,x'dicarbonsäuren. Von den cycloaliphatischen Dicarbonsäuren sind Cyclohexandicarbonsäuren ( insbesondere Cyclohexan-1,4-dicarbonsäure) zu nennen. Von den aliphatischen Dicarbonsäuren sind die (C₃-C₁₉) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestem und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Mindestens eine Deckschicht der erfindungsgemäßen Mehrschichtfolie enthält eine im folgenden näher beschriebene Mischung bzw, ein Blend aus zwei Komponenten I und II und gegebenenfalls zugesetzte Additive.

Die Komponente I der Deckschichtmischung bzw. des Blends enthält im wesentlichen einen thermoplastischen Polyester, insbesondere einen solchen Polyester wie er für die Basisschicht näher beschrieben wurde. Für die Erzeugung hoher Mattgrade hat es sich dabei als günstig erwiesen, wenn das Polyesterpolymere für die Komponente I der erfindungsgemäßen Deckschicht eine an sich vergleichsweise geringe Viskosität aufweist. Für die Beschreibung der Viskositäten der Schmelzen wird eine modifizierte Lösungsmittelviskosifät (SV-Wert) verwendet. Für handelsübliche Polyethylenterephthalate, die sich zur Herstellung von biaxial orientierten Folien eignen, liegen die SV-Werte im Bereich von 500 bis 1200. Um eine hohe Mattheit der Folie im Sinne der vorliegenden Erfindung zu bekommen, hat es sich als günstig erwiesen, wenn der SV-Wert der Polymeren für die Komponente I der erfindungsgemäßen Deckschicht im Bereich von 500 bis 800, bevorzugt im Bereich von 500 bis 750, insbesondere bevorzugt im Bereich von 500 bis 700 liegen.

Die Komponente II der Deckschichtmischung wird wie bereits angegeben durch Kondensation der folgenden Monomeren bzw. deren zur Bildung von Polymeren befähigten Derivaten erhalten:
A) mindestens 65 Mol-% Isophthalsäure,
B) ggf. einer aliphatischen Dicarbonsäure vorzugsweise der Formel

   HOOC(CH₂)ₙCOOH

   wobei
   n im Bereich von 1 bis 11 liegt,
C) einem Sulfomonomeren, enthaltend eine Alkalimetallsulfonatgruppe an dem aromatischen Teil einer aromatischen Dicarbonsäure und
D) der zur Bildung von 100 Mol-% Kondensat notwendigen Menge eines aliphatischen oder cycloaliphatischen Glykols vorzugsweise mit 2 bis 11 Kohlenstoffatomen.

Die insgesamt anwesenden Säureäquivalente sollen auf molarer Basis im wesentlichen den insgesamt anwesenden Glykoläquivalenten entsprechen.

Als Komponente B) der Copolyester geeignete Dicarbonsäuren sind z.B. Malon-, Adipin-, Azelain-, Glutar-, Sebacin-, Kork-, Bemstein- und Brassylsäure sowie Mischungen dieser Säuren oder deren zur Bildung von Polyestem befähigte Derivate. Von den genannten Säuren wird Sebacinsäure bevorzugt.

Beispiele für Sulfomonomere, die eine Metallsulfonatgruppe an dem aromatischen Teil einer aromatischen Dicarbonsäure (Komponente C) enthalten, sind solche Monomere, die der folgenden allgemeinen Formel entsprechen: 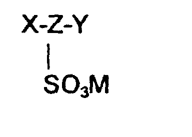 In dieser Formel ist
M ein einwertiges Kation eines Alkalimetalls,
Z ein dreiwertiger aromatischer Rest, und
X und Y sind Carboxylgruppen oder Polyester bildende Äquivalente.

Monomere dieser Art sind in den US-A 3,563,942 und 3,779,993 beschrieben. Beispiele solcher Monomeren sind Natrium-sulfoterephthalsäure, Natrium-5-sulfoisophthalsäure, Natrium-sulfophthalsäure, 5-(p-Natriumsulfphenoxy)-isophthalsäure, 5-(Natriumsulfopropoxy)-isophthalsäure und dergleichen Monomere sowie deren zur Bildung von Polyestern befähigte Derivate, wie z.B. die Dimethylester. M ist vorzugsweise Na⁺, Li⁺ oder K⁺.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu solchen Gruppen zählen Carboxylgruppen sowie deren niedere Alkylester, z.B. Dimethylterephthalat, Diethylterephthalat und zahlreiche andere Ester, Halogenide oder Salze. Bevorzugt werden die Säuremonomeren als Dimethylester verwendet, da auf diese Weise die Kondensationsreaktion besser gesteuert werden kann.

Als Komponente D) geeignete Glykole sind z.B. Ethylenglykol, 1,5-Pentadiol, 1,6-Hexandiol, Neopentylglykol, 1,10-Decandiol, Cyclohexan-dimethanol und ähnliche Substanzen. Bevorzugt wird Ethylenglykol verwendet.

Die Copolyester können durch bekannte Polymerisationstechniken hergestellt werden. Im allgemeinen wird so verfahren, dass die Säurekomponenten mit Glykolzusammengebracht und in Anwesenheit eines Veresterungskatalysators erhitzt werden, mit anschließender Zugabe eines Polykondensationskatalysators.

Es hat sich gezeigt, dass die verhältnismäßigen Anteile der Komponenten A, B, C und D, die zur Herstellung der erfindungsmäßigen Mischungen eingesetzt werden, entscheidend für das Erzielen der matten Deckschicht sind. So muß z.B. Isophthalsäure (Komponente A) zu mindestens etwa 65 Mol-% als Säurekomponente anwesend sein. Bevorzugt ist die Komponente A reine Isophthalsäure, die in einer Menge von etwa 70 bis 95 Mol-% anwesend ist.

Für die Komponente B gilt, dass jede Säure mit der genannten Formel zufriedenstellende Ergebnisse bringt, wobei Adipinsäure, Azelainsäure, Sebacinsäure, Malonsäure, Bernsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten der Mischung II, wenn die Komponente B in der Zusammensetzung enthalten ist.

Die Glykolkomponente ist in stöchiometrischer Menge anwesend.

Die für die Zwecke der Erfindung geeigneten Copolyester zeichnen sich weiterhin dadurch aus, dass sie eine Säurezahl unter 10 , vorzugsweise von 0 bis 3, ein mittleres MolGewicht unter etwa 50.000 und einen SV-Wert im Bereich von etwa 30 bis 700, vorzugsweise etwa 350 bis 650, aufweisen.

Das Verhältnis (Gewichtsverhältnis) der beiden Komponenten I und II der Deckschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II =10:90 bis I:II = 95:5, vorzugsweise zwischen I:II = 20:80 bis I:II = 95:5 und insbesondere zwischen I:II =30:70 bis I:II =95:5.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflußt werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vemetzungen beobachtet. Kohlenmonoxid, Kohlendioxid und Carbonsäuren stellen die mengenmäßig überwiegenden Photooxidationsprodukte dar. Neben derdirekten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in α-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente, matte Folien sind nur organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die mindestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasung führen. Geeignete UV-Stabilisatoren als Lichtschutzmittel sind die 2-Hydroxybenzotriazole und die Triazine.

In einer ganz besonders bevorzugten Ausführungsform enthält die erfindungsgemäße Folie 0,01 Gew.-% bis 5,0 Gew.-% 2-(4,6-Diphenyl-1,3,5-triazin 2-yl)-5-(hexyl)oxy-phenol der Formel 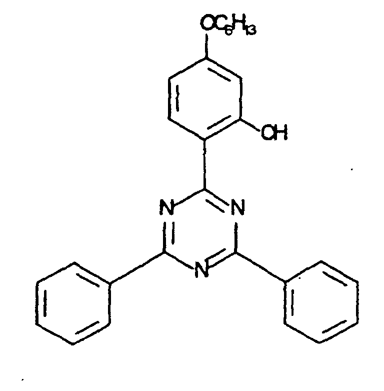 oder 0,01 Gew.-% bis 5,0 Gew.-% 2,2-Methylen-bis(6-(2H-benzotriazol-2-yl)-4-(1,1,2,2-tetramethylpropyl)-phenol der Formel 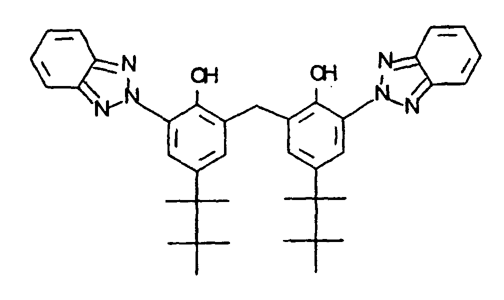 In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel zwischen 0,01 Gew.-% und 5,0 Gew.-%, bezogen auf das Gewicht an kristallisierbarem Polyethylenterephthalat, liegt.

Der oder die UV-Stabilisatoren sind vorzugsweise in der/den Deckschichten enthalten. Bei Bedarf kann auch die Kemschicht mit UV-Stabilisator ausgerüstet sein.

Es war völlig überraschend, dass der Einsatz der oben genannten UV-Stabilisatoren in Folien zu dem gewünschten Ergebnis führte. Der Fachmann hätte vermutlich zunächst versucht, eine gewisse UV-Stabilität über ein Antioxidanz zu erreichen, hätte jedoch bei Bewitterung festgestellt, dass die Folie schnell gelb wird.

Vor dem Hintergrund, dass UV-Stabilisatoren das UV-Licht absorbieren und somit Schutz bieten, hätte der Fachmann wohl handelsübliche Stabilisatoren eingesetzt. Dabei hätte er festgestellt, dass
- der UV-Stabilisator eine mangelnde thermische Stabilität hat und sich bei Temperaturen zwischen 200 °C und 240 °C zersetzt und ausgast;
- er große Mengen (ca. 10 bis 15 Gew.-%) UV-Stabilisator einarbeiten muß, damit das UV-Licht absorbiert wird und damit die Folie nicht geschädigt wird.

Bei diesen hohen Konzentrationen hätte er festgestellt, dass die Folie schon nach der Herstellung gelb ist, bei Gelbwertunterschieden (YID) um die 25. Desweiteren hätte er festgestellt, dass die mechanischen Eigenschaften negativ beeinflußt werden. Beim Verstrecken hätte er ungewöhnliche Probleme bekommen wie
- Abrisse wegen mangelnder Festigkeit, d. h. E-Modul zu niedrig;
- Düsenablagerungen, was zu Profilschwankungen führt;
- Walzenablagerungen vom UV-Stabilisator, was zu Beeinträchtigungen der optischen Eigenschaften (Klebedefekte, inhomogene Oberfläche) führt;
- Ablagerungen in Streck-, Fixierrahmen, die auf die Folie tropfen.

Daher war es mehr als überraschend, dass bereits mit niedrigen Konzentrationen des UV-Stabilisators ein hervorragender UV-Schutz erzielt wurde. Sehr überraschend war, dass sich bei diesem hervorragenden UV-Schutz
- der Gelbwert der Folie im Vergleich zu einer nicht stabilisierten Folie im Rahmen der Meßgenauigkeit nicht ändert;
- sich keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher und stabil auf high speed film lines bis zu Geschwindigkeiten von 420 m/min produktionssicher hergestellt werden kann.

Die Basisschicht und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vemetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 10 Gew.-% erwiesen. Durch die Zugabe von diesen Partikeln in die erfindungsgemäße Deckschicht A hat man eine weitere vorteilhafte Möglichkeit, den Mattgrad der Folie zu variieren. Mit der Zunahme der Pigmentkonzentration ist in der Regel auch eine Zunahme des Mattgrades der Folie verbunden. Eine detaillierte Beschreibung der Antiblockmittel findet sich beispielsweise in der EP-A 0 602 964.

Gegenstand der vorliegenden Erfindung ist auch ein Verfahren zur Herstellung dieser Folie. Es umfaßt das
a) Herstellen einer Folie aus Basis- und Deckschicht(en) durch Koextrusion,
b) biaxiale Verstrecken der Folie und
c) Thermofixieren der verstreckten Folie.

Zur Herstellung der erfindungsgemäßen Deckschicht werden zweckmäßig Granulate aus der Mischungskomponente I und Granulate aus der Mischungskomponente II im gewünschten Mischungsverhältnis direkt dem Extruder zugeführt. Es hat sich als zweckmäßig erwiesen, für die Extrusion der erfindungsgemäßen matten Deckschicht einen Zweischneckenextruder zu verwenden, wie er z. B. in der EP-A 0 826 478 beschrieben ist. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich weitere Copolymere aus den Homopolymeren und den Copolymeren bilden können.

Der UV-Stabilisator kann bereits beim Rohstoffhersteller in die Polymere der Deckschichten und/oder der Basisschicht eingearbeitet werden.

Besonders bevorzugt ist die Zugabe des UV-Stabilisators über die Masterbatch-Technologie direkt bei der Folienherstellung. Der UV-Stabilisator wird in einem festen Trägermaterial voll dispergiert. Als Trägermaterialien kommen das Deckschicht- und/oder das Basisschichtpolymer selbst, wie z. B. das Polyethylenterephthalat oder auch andere Polymere, die mit dem Thermoplasten ausreichend verträglich sind, in Frage.

Wichtig bei der Masterbatch-Technologie ist, dass die Korngröße und das Schüttgewicht des Masterbatches ähnlich der Korngröße und dem Schüttgewicht der Basisschichtund/oder Deckschichtpolymeren ist, so dass eine homogene Verteilung des UV-Stabilisators und damit eine homogene UV-Stabilität erfolgen kann.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Sofern gewünscht, kann sich an die Querstreckung nochmals eine Längsverstreckung und sogar eine weitere Querverstreckung anschließen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die Folie kann weiterhin auf mindestens einer ihrer Oberflächen beschichtet werden, so dass die Beschichtung auf der fertigen Folie eine Dicke von 5 bis 100 nm, bevorzugt 20 bis 70 nm, insbesondere 30 bis 50 nm aufweist. Die Beschichtung wird bevorzugt In-line aufgebracht, d.h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtungen äußerst homogen in den genannten Schichtdicken auftragen lassen. Die Beschichtungen werden bevorzugt als Lösungen, Suspensionen oder Dispersionen aufgetragen, besonders bevorzugt als wäßrige Lösung, Suspension oder Dispersion. Die genannten Beschichtungen verleihen der Folienoberfläche eine zusätzliche Funktion bspw. wird die Folie dadurch siegelfähig, bedruckbar, metallisierbar, sterilisierbar, antistatisch oder verbessern z.B. die Aromabarriere oder ermöglichen die Haftung zu Materialien, die ansonsten nicht auf der Folienoberfläche haften, würden (z.B. fotografische Emulsionen). Beispiele für Stoffe/Zusammensetzungen, die eine zusätzliche Funktionalität verleihen sind:

Acrylate, wie sie bspw. beschrieben sind in der WO 94/13476, Ethylvinylalkohole, PVDC, Wasserglas (Na₂SiO₄), hydrophilische Polyester (5-Na-sulfoisophthalsäurehaltige PET/IPA Polyester wie sie bspw. beschrieben sind in der EP-A 0144 878, US-A 4,252,885 oder EP-A 0 296 620, Vinylacetate wie sie bspw. beschrieben sind in der WO 94/13481, Polyvinylacetate, Polyurethane, Alkali- oder Erdalkalisalze von C₁₀-C₁₈-Fettsäuren, Butadiencopolymere mit Acrylnitril oder Methylmethacrylat, Methacrylsäure, Acrylsäure oder deren Ester.

Die genannten Stoffe/Zusammensetzungen werden als verdünnte Lösung, Emulsion oder Dispersion vorzugsweise als wäßrige Lösung, Emulsion oder Dispersion auf eine oder beide Folienoberflächen aufgebracht und anschließend das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann die zuvor erwähnten gewünschten Schichtdicken.

Desweiteren können die Folien - vorzugsweise in einem Off-Line-Verfahren mit Metallen wie Aluminium oder keramischen Materialien wie SiOₓ oderAlₓO_{y} beschichtet werden. Dies verbessert insbesondere ihre Gasbarriereeigenschaften.

Die erfindungsgemäße Polyesterfolie enthält vorzugsweise noch eine zweite Deckschicht C. Aufbau, Dicke und Zusammensetzung dieser zweiten Deckschicht können unabhängig von der bereits vorhandenen Deckschicht gewählt werden, wobei die zweite Deckschicht ebenfalls die bereits genannten Polymere, UV-Stabilisatoren oder Polymermischungen für die Basis-oder die erfindungsgemäße erste Deckschicht enthalten kann, welche aber nicht mit den der ersten Deckschicht identisch sein müssen. Die zweite Deckschicht kann auch andere gängige Deckschichtpolymere enthalten, die auch mit UV-Stabilisator ausgerüstet sein können.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive und den UV-Stabilisator enthalten. Die Dicke der Zwischenschicht ist im allgemeinen größer als 0,3 µm und liegt vorzugsweise im Bereich von 0,5 bis 15 µm, insbesondere 1,0 bis 10 µm

Die Dicke der Deckschicht(en) ist im allgemeinen größer als 0, 1 µm und liegt vorzugsweise im Bereich von 0,2 bis 5 µm, insbesondere 0,2 bis 4 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 500 µm, insbesondere 5 bis 450 µm, vorzugsweise 6 bis 300 µm, wobei die Basisschicht einen Anteil von vorzugsweise etwa 40 bis 90 % an der Gesamtdicke hat.

Bewitterungstests haben ergeben, dass die erfindungsgemäßen matten, UV-stabilisierten Folien selbst nach 5 bis 7 Jahren (aus den Bewitterungstests hochgerechnet) Außenanwendung im allgemeinen keine erhöhte Vergilbung, keine Versprödung, keine Rißbildung an der Oberfläche und keine Verschlechterung der mechanischen Eigenschaften aufweisen.

Ein weiterer Vorteil besteht darin, dass die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, dass das Regenerat in einem Anteil von bis zu 50 Gew.-%, bevorzugt 10 bis 50 Gew.-%, jeweils bezogen auf das Gesamtgewicht der Folie, wiederverwendet werden kann, ohne dass dabei die physikalischen Eigenschaften der Folie nennenswert negativ beeinflußt werden.

Die Folie eignet sich hervorragend zur Verpackung von licht- und/oder luftempfindlichen Nahrungs- und Genußmitteln.

Zusammengefaßt zeichnet sich die erfindungsgemäße Folie durch eine UV-Licht-Undurchlässigkeit, eine hohe UV-Stabilität, einen niedrigen Glanz, insbesondere einen niedrigen Glanz der Folienoberfläche A, und durch eine vergleichsweise niedrige Trübung aus. Außerdem besitzt sie ein gutes Wickel- und Verarbeitungsverhalten. Weiterhin ist erwähnenswert, dass die erfindungsgemäße Deckschicht gut mit Kugelschreiber, Filzstift oder Füllfeder beschriftbar ist.

Der Glanz der Folienoberfläche A ist niedriger als 70. In einer bevorzugten Ausführungsform beträgt der Glanz dieser Seite weniger als 60 und in einer besonders bevorzugten Ausführungsform weniger als 50. Diese Folienoberfläche vermittelt damit einen besonders hohen werbewirksamen Charakter und eignet sich daher insbesondere als außenliegende Oberfläche bei einer Verpackung.

Die Trübung der Folie ist kleiner als 40 %. In einer bevorzugten Ausführungsform beträgt die Trübung der Folie weniger als 35 % und in einer besonders bevorzugten Ausführungsform weniger als 30 %. Durch die vergleichsweise geringe Trübung der Folie (verglichen mit einer matten Monofolie; siehe Vergleichsbeispiel ) kann die Folie z.B. im Konterdruck bedruckt werden oder es können Sichtfenster eingebaut werden, durch die z.B. das Füllgut sehr gut zu erkennen ist.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Weitere Anwendungsgebiete sind die Verwendung zur Herstellung von Etiketten (Labels), als Trennfolie zur Herstellung von GFK-Halbzeugen, als Prägefolie oder In-Mold-Labelling.

Die nachstehende Tabelle (Tabelle 1) faßt die wichtigsten erfindungsgemäßen Folieneigenschaften noch einmal zusammen.

**Tabelle 1**

| | erfindungsgemäßer Bereich | bevorzugt | besonders bevorzugt | Einheit | Meßmethode |
|---|---|---|---|---|---|
| Glanz, Seite A | < 70 | < 60 | < 50 | | DIN 67 530 |
| Trübung | < 40 | < 35 | < 30 | % | ASTM-D 1003-52 |
| Reibungskoeffizient: | < 0,6 | <0,55 | < 0,50 | | DIN 53 375 |
| A-Seite gegen sich selbst | < 0,5 | <0,55 | < 0,55 | | |
| mittlere Rauhigkeit R₂ A-Seite | 200-600 | 230-550 | 250-530 | nm | DIN 4768, bei elnem Cut-off von 0,25 nm |
| Gelbwert (YID) | < 30 | < 20 | < 10 | | DIN 6167 |
| Hohe UV-Stabilität | ja | | | | |
| UV-Licht-Durchtässigkeit ab Wellenlänge | > 350 | > 360 | | nm | |

Zur Charakterisierung der Rohstoffe und der Folien wurden die folgenden Methoden benutzt:

### Meßmethoden

DIN = Deutsches Institut für Normung
ISO = International Organization for Standardization
ASTM = American Society for Testing and Materials

### Mechanische Eigenschaften

Der E-Modul und die Reißfestigkeit und die Reißdehnung werden in Längs- und Querrichtung nach ISO 527-1-2 gemessen.

### Bewitterung (beidseitig), UV-Stabilität

Die UV-Stabilität wird nach der Testspezifikation ISO 4892 wie folgt geprüft:

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 W/m2, 340 nm |
| Temperatur | 63 °C |
| Relative Luftfeuchte | 50 % |
| Xenontampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

Numerische Werte von < 0,6 sind vernachlässigbar und bedeuten, dass keine signifikante Farbänderung vorliegt.

### Gelbwert

Der Gelbwert (YID) ist die Abweichung von der Farblosigkeit in Richtung "Gelb" und wird gemäß DIN 6167 gemessen. Gelbwerte (YID) von < 5 sind visuell nicht sichtbar.

Bei nachstehenden Beispielen und Vergleichsbeispielen handelt es sich jeweils um Folien unterschiedlicher Dicke, die auf der beschriebenen Extrusionsstraße hergestellt werden.

Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, dem Gelbwert (YID), der Oberflächendefekte, der Lichttransmission und des Glanzes geprüft.

Die folgenden Beispiele illustrieren die Erfindung.

### Beispiel 1

### a) Zubereitung der Komponente II für die erfindungsgemäße Deckschichtmischung Ein Copolyester mit 90 Mol-% Isophthalsäure und 10 Mol-% des Natriumsalzes der 5-Sulfoisophthalsäure als Säurekomponente und 100 Mol-% Ethylenglykol als Glykolkomponente wurde nach dem folgenden Verfahren hergestellt:

Ein 2 I fassender Reaktionsbehälter aus Edelstahl, der mit einem Ankerrührer, einem Thermoelement zur Messung der Temperatur des Gefäßinhalts, einer 18 Zoll-Claisen/Vigreux-Destillationskolonne mit Kühler und Vorlage, einer Einlaßöffnung und einem Heizmantel ausgerüstet war, wurde auf 190 °C vorgeheizt, mit Stickstoff gespült und mit 1065,6 g Dimethylisophthalat, 180,6 g Dimethyl-5-sulfoisophthalat-natriumsalz und 756,9 g Ethylenglykol befüllt. Außerdem wurden noch ein Puffer (Na₂CO₃ · 10 H₂O - 0,439 g) und ein Umesterungskatalysator (Mn(OAc)₂ · 4 H₂O - 0,563 g) in ein Gefäß gegeben. Das Gemisch wurde unter Rühren erhitzt, wobei Methanol ab destillierte. Während der Destillation wurde die Gefäßtemperatur allmählich auf 250 °C erhöht. Als das Gewicht des Destillates der theoreischen Methanolausbeute entsprach, wurde eine Ethylenglykollösung mit einem Gehalt von 0,188 g phosphoriger Säure zugesetzt. Die Destillationskolonne wurde durch einen gekrümmten Dampfabzug mit Vorlage ersetzt. Dem Reaktionsgemisch wurden 20 g reines Ethylencarbonat zugegeben, und sofort setzte eine heftige Gasentwicklung (CO₂) ein. Die CO₂-Entwicklung ließ nach etwa 10 min nach. Es wurde dann ein Unterdruck von 240 mm Hg gezogen und der Polykondensationskatalysator (0,563 g Sb₂O₃) in einer Ethylenglykolaufschlämmung) hinzugefügt. Das Reaktionsgemisch wurde unter Beibehaltung des Unterdruckes von 240 mm Hg 10 min gerührt, wonach der Druck in Stufen von jeweils 10 mm Hg/min von 240 mm Hg auf 20 mm Hg weiter reduziert wurde. Sobald das Vakuum im System auf 20 mm Hg reduziert war, wurde die Gefäßtemperatur mit einer Geschwindigkeit von 2 °C/min von 250 °C auf 290 °C angehoben. Bei einer Temperatur von 290 °C im Gefäß wurde die Rührergeschwindigkeit gedrosselt und der Druck auf höchstens 0,1 mm Hg gesenkt. Zu diesem Zeitpunkt wurde ein Amperemeterablesung des Rührermotors vorgenommen. Die Viskosität des Polymeren wurde gesteuert, indem man die Polykondensation nach festen Werten für die Veränderung der Amperezahl des Rührermotors von (jeweils) 2,3 A ablaufen ließ. Als das gewünschte Molgewicht erreicht war, wurde das Gefäß mit Stickstoff unter Druck gesetzt, um das flüssige Polymere aus dem Bodenstopfen des Gefäßes in ein Abschreckbad aus Eiswasser zu pressen.

### B) Mischungsherstellung für die erfindungsgemäße Deckschicht A

Es wurden 75 Gew.-% der Komponente I (Polyethylenterephthalat mit einem SV-Wert von 680) mit 15 Gew.-% der Komponente II und 10 Gew.-% eines Masterbatches, welches den UV-Stabilisator enthält, dem Einfülltrichter eines Zweischneckenextruders zugeführt und beide Komponenten zusammen bei ca. 300 °C extrudiert und dem Deckschichtkanal A einer Mehrschichtdüse zugeführt.

Das Masterbatch setzt sich aus 5 Gew.-% 2-(4,6-Diphenyl-9,3,5-triazin-2yl)-5-(hexyl)-oxyphenol (TINUVIN® 1577) als UV-Stabilisator und 95 Gew.-% Polyethylenterephthalat zusammen.

Zugleich wurden Chips aus Polyethylenterephthalat bei 160 °C auf eine Restfeuchte von weniger als 50 ppm getrocknet und dem Extruder für die Basisschicht zugeführt. Ebenfalls wurden Chips aus Polyethylenterephthalat, dem UV-Masterbatch und ein Füllstoff dem Extruder für die Deckschicht C zugeführt. Durch Koextrusion und anschließende stufenweise Orientierung in Längs- und Querrichtung wurde dann eine matte dreischichtige Folie mit ABC-Aufbau und einer Gesamtdicke von 12 µm hergestellt. Die Deckschichten hatten eine Dicke von jeweils 1,5 µm.

### Basisschicht B:

- 95 Gew.-%: Polyethylenterephthalat (RT 49 von Hoechst AG) mit einem SV-Wert von 800 und
- 5 Gew.-%: Masterbatch aus 99 Gew.-% Polyethylenterephthalat und 1,0 Gew.-% Kieselsäurepartikel (Sylobloc® 44 H der Firma Grace) mit einer mittleren Teilchengröße von 4,5 µm.

### Deckschicht A:

- 75 Gew.-%: Komponente I und
- 15 Gew.-%: Komponente II
- 10 Gew.-%: UV-Masterbatch aus 5 Gew.-% TINUVIN 1577 und 95 Gew.-% Polyethylenterephthalat

### Deckschicht C:

- 80 Gew.-%: Polyethylenterephthalat (RT 49 von Hoechst AG) mit einem SV-Wert von 800 und
- 10 Gew.-%: Masterbatch aus 99 Gew.-% Polyethylenterephthalat und 1,0 Gew.-% Kieselsäurepartikel (Sylobloc 44 H der Firma Grace) mit einer mittleren Teilchengröße von 4,5 µm
- 10 Gew.-%: UV-Masterbatch aus 5 Gew.-% TINUVIN 1577 und 95 Gew.-% Polyethylenterephthalat

Die einzelnen Verfahrensschritte waren:

| | | |
|---|---|---|
| Längsstreckung | Temperatur | 85-135 °C |
| | Längsstreckverhältnis | 4,0: 1 |
| Querstreckung | Temperatur | 85-135 °C |
| | Querstreckverhältnis | 4,0 : 1 |
| Fixierung | Temperatur | 230 °C |

### Beispiel 2

Analog zu Beispiel 1 wurde durch Koextrusion eine dreischichtige Folie mit einer Gesamtdicke von 12 µm hergestellt. Es wurde nur die Zusammensetzung der Deckschicht A geändert:

### Deckschicht A:

- 70 Gew.-%: Komponente I
- 20 Gew.-%: Komponente II und
- 10 Gew.-%: UV-Masterbatch

### Beispiel 3

Eine koextrudierte Folie mit der Rezeptur gemäß Beispiel 1, bei der die Deckschicht A wie folgt zusammengesetzt war:
- 65 Gew.-%: Komponente I
- 25 Gew.-%: Komponente II und
- 10 Gew.- %: UV-Masterbatch

### Beispiel 4

Eine koextrudierte Folie mit der Rezeptur gemäß Beispiel 1, bei der die Deckschicht A wie folgt zusammengesetzt war:
- 55 Gew.-%: Komponente I
- 35 Gew.-%: Komponente II und
- 10 Gew.-%: UV-Masterbatch

### Vergleichsbeispiel

Es wurde eine Monofolie hergestellt, die wie die Deckschicht A aus Beispiel 3 zusammengesetzt war, aber keinen UV-Stabilisator enthält. Die Folienoberflächen hatten die geforderte Mattheit, die Folie entsprach jedoch nicht den gestellten Anforderungen, weil sie zu trüb war. Außerdem war es sehr schwer, die Folie verfahrenssicher und daher wirtschaftlich herzustellen.

Desweiteren ist die Folie nicht UV-stabil und läßt das schädliche UV-Licht durch. Nach 1000 Stunden Bewitterung zeigt die Folie Risse und Versprödungserscheinungen sowie eine sichtbare Gelbfärbung.

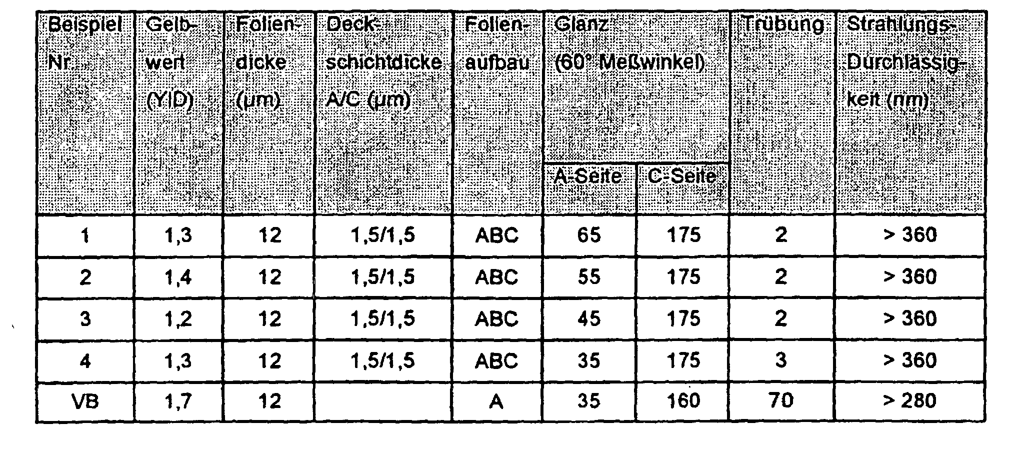

Nach 1000 Stunden Bewitterung mit dem Atlas Cl 65 Weather Ometer zeigen die Folien aus den Beispielen 1 bis 4 keinerlei Versprödungen, keine Risse und Gelbwerte < 10.

## Patentansprüche

1. Koextrudierte, biaxial orientierte Polyesterfolie, bestehend aus einer Basisschicht die zu mindestens 70 Gew.-% aus einem thermoplastischen Polyester besteht,
und mindestens einer Deckschicht, wobei die Folie einen UV-Stabilisator enthält, der ausgewählt ist aus 2-Hydroxybenzotriazolen Triazinen und Mischungen aus diesen und wobei die Gesamtkonzentration an Lichtschutzmitteln zwichen 0,01 und 5 Gew.-% liegt, bezogen auf das Gewicht an kristallisierbarem Polyethylenterephthalat,
und eine matte Deckschicht aufweist, die eine Mischung und/oder ein Blend aus zwei Komponenten I und II enthält, wobei die Komponente I im wesentlichen ein Polyethylenterephthalat-Homopolymer oder Polyethylenterephthalat Copolymer oder eine Mischung aus Polyethylenterephthatat-Homopolymer oder Polyethylenterephthalat-Copolymeren ist und die Komponente II ein Copolyester ist aus mindestens 65 Mol-% Isophthalsäure als Säurekomponente, ggf. aliphatische Dicarbonsäure, Sulfomonomeres, das eine Metallsulfonatgruppe an dem aromatischen Teil einer aromatischen Dicarbonsäure enthält, und aliphatisches oder cycloaliphatisches Glykol.

2. Folie nach Anspruch 1, **dadurch gekennzeichnet, dass** die Komponente II ein Kondensationsprodukt der folgenden Monomere und/oder deren zur Bildung von Polymeren befähigten Derivaten ist:
A) 65 bis 95 Mol-% Isophthalsäure;
B) 0 bis 30 Mol-% wenigstens einer aliphatische Dicarbonsäure mit der Formel
HOOC(CH₂)ₙCOOH
wobei
n im Bereich von 1 bis 11 liegt;
C) 5 bis 15 Mol-% wenigstens eines Sulfomonomeren enthaltend eine Alkalimetall-sulfonatgruppe an dem aromatischen Teil einer Dicarbonsäure;
D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;
wobei die Prozentangaben jeweils bezogen sind auf die Gesamtmenge der die Komponente II bildenden Monomeren.

3. Folie nach Anspruch 1 oder 2, **dadurch gekennzeichnet, dass** das Verhältnis der Komponenten I und II im Bereich von I:II = 10:90 bis 1:1195:5 liegt.

4. Folie nach einem oder mehreren der Ansprüche 1 bis 3, **dadurch gekennzeichnet, dass** die Deckschicht eine Dicke von 0,2 bis 6 µm, aufweist.

5. Folie nach einem oder mehreren der Ansprüche 1 bis 4, **dadurch gekennzeichnet, dass** sie zweischichtig ist und aus der Basisschicht und der Deckschicht besteht.

6. Folie nach einem oder mehreren der Ansprüche 1 bis 4, **dadurch gekennzeichnet, dass** sie dreischichtig ist und aus der Basisschicht und je einer Deckschicht auf beiden Seiten der Basisschicht besteht.

7. Folie nach Anspruch 5 oder 6, **dadurch gekennzeichnet, dass** eine Deckschicht einen anorganischen Füllstoff enthält.

8. Folie nach einem oder mehreren der Ansprüche 1 bis 7, **dadurch gekennzeichnet, dass** sie auf mindestens einer Oberfläche metallisiert oder mit SiOₓ, AlₓO_{y}, Ethylvinylalkohol, PVDC, Wasserglas, hydrophilischem Polyester, Vinylacetat, Polyvinylacetat, Polyurethan, Alkali- oder Erdalkali- Fettsäuresalze, Butadiencopolymer, (Meth)acrylsäure oder deren Ester oder Silikon beschichtet ist.

9. Verfahren zur Herstellung der Folie nach Anspruch 1, bei dem Polyesterschmelzen entsprechend den Zusammensetzungen der Deck- und Basisschichten einer Mehrschichtdüse zugeführt werden, aus der Düse auf eine Abkühlwalze extrudiert werden und die so erhaltene Vorfolie anschließend biaxial verstreckt und hitzefixiert wird, wobei die Polyesterschmelze(n) für die Basisschicht und/oder für die Deckschicht(en) mindestens einen UV-Stabilisator enthalten und die Polyesterschmelze für die Deckschicht(en) eine Mischung und/oder ein Blend aus zwei Komponenten I und II enthält, wobei die Komponente I. ein Polyethylenterephthalat-Homopolymer oder Polyethylenterephthalat Copolymer oder eine Mischung aus Polyethylenterephthalat Homo- oder Copolymeren ist und die Komponente II ein Polymer ist, welches mindesten eine Sulfonatgruppe enthält.

10. Verwendung einer Folie nach Anspruch 1 als Innenraumverkfeidung, als Display, für Schilder, für Schutzverglasungen, im Beleuchtungssektor, im Laden- und Regalbau, als Werbeartikel, Kaschiermedium, für Gewächshäuser, Überdachungen, Außenverkleidungen, Abdeckungen, im Bausektor, als Lichtwerbeprofil, Schattenmatte oder in Elektroanwendungen.

## Claims

1. A coextruded, biaxially oriented polyester film composed of a base layer which is composed of at least 70% by weight of a thermoplastic polyester, and of at least one outer layer, where the film comprises a UV stabilizer selected from 2-hydroxybenzotriazoles, triazines, and mixtures of these, and where the total concentration of light stabilizer is between 0.01 and 5% by weight, based on the weight of crystallizable polyethylene terephthalate, and has a matt outer layer which comprises a mixture and/or a blend made from two components I and II, where component I is essentially a polyethylene terephthalate homopolymer or polyethylene terephthalate copolymer or a mixture made from polyethylene terephthalate homopolymer or from polyethylene terephthalate copolymers, and component II is a copolyester made from at least 65 mol% of isophthalic acid as acid component, where appropriate from aliphatic dicarboxylic acid, from a sulfomonomer which contains a metal sulfonate group on the aromatic moiety of an aromatic dicarboxylic acid, and from an aliphatic or cycloaliphatic glycol.

2. The film as claimed in claim 1, **characterized in that** component II is a condensation product of the following monomers and/or of their derivatives capable of forming polymers:
A) from 65 to 95 mol% of isophthalic acid,
B) from 0 to 30 mol% of at least one aliphatic dicarboxylic acid with the formula
HOOC (CH₂)ₙCOOH
where
n is from 1 to 11;
C) from 5 to 15 mol% of at least one sulfomonomer containing an alkali metal sulfonate group on the aromatic moiety of a dicarboxylic acid;
D) a copolymerizable aliphatic or cycloaliphatic glycol having from 2 to 11 carbon atoms, in the stoichiometric amount necessary to form 100 mol% of condensate;
where each of the percentages given is based on the total amount of the monomers forming component II.

3. The film as claimed in claim 1 or 2, **characterized in that** the ratio of components I and II is from I:II = 10:90 to I:II = 95:5.

4. The film as claimed in one or more of claims 1 to 3, **characterized in that** the outer layer has a thickness of from 0.2 to 6 µm.

5. The film as claimed in one or more of claims 1 to 4, **characterized in that** the film has two layers and is composed of the base layer and of the outer layer.

6. The film as claimed in one or more of claims 1 to 4, **characterized in that** the film has three layers and is composed of the base layer and of an outer layer on each side of the base layer.

7. The film as claimed in claim 5 or 6, **characterized in that** an outer layer comprises an inorganic filler.

8. The film as claimed in one or more of claims 1 to 7, **characterized in that** at least one surface of the film has been metallized or has been coated with SiOₓ, AlₓO_{y}, ethylvinyl alcohol, PVDC, water glass, hydrophilic polyester, vinyl acetate, polyvinyl acetate, polyurethane, fatty acid salts of alkali metals or of alkaline earth metals, butadiene copolymer, (meth)acrylic acid or esters thereof, or silicone.

9. A process for producing the film as claimed in claim 1, in which polyester melts corresponding to the compositions of the outer and base layers are fed to a coextrusion die, and extruded from the die onto a chill roll, and the resultant prefilm is then biaxially oriented and heat-set, where the polyester melt(s) for the base layer and/or for the outer layer(s) comprise at least one UV stabilizer, and the polyester melt for the outer layer(s) comprises a mixture and/or a blend made from two components I and II, where component I is a polyethylene terephthalate homopolymer or polyethylene terephthalate copolymer or a mixture made from polyethylene terephthalate homo- or copolymers and component II is a polymer which contains at least one sulfonate group.

10. The use of the film as claimed in claim 1 as interior decoration, as display, for placards, for protective glazing, in the lighting sector, in the fitting out of shops or stores, as a promotional item or laminating medium, for greenhouses, roofing systems, exterior cladding, protective coverings, in the construction sector, as an illuminated advertising profile or a blind, or in electrical applications.

## Revendications

1. Film polyester co-extrudé orienté biaxialement, composé d'une couche de base, laquelle est composée à au moins 70 % en poids d'un polyester thermoplastique, et au moins d'une couche de couverture, le film contenant un stabilisant UV choisi parmi les 2-hydroxybenzotriazoles, les triazines et leurs mélanges, la concentration totale en agents protecteurs de la lumière étant comprise entre 0,01 et 5 % en poids par rapport au poids en polyéthylène téréphtalate cristallisable, et comportant une couche de couverture mate contenant un mélange et/ou un blend de deux composantes I et II, la composante I étant essentiellement un homopolymère de polyéthylène téréphtalate ou un copolymère de polyéthylène téréphtalate ou un mélange d'homopolymères de polyéthylène téréphtalate ou de copolymères de polyéthylène téréphtalate, et la composante II est un co-polyester d'au moins 65 % en mole d'acide isophtalique à titre de composante acide, le cas échéant d'acide di-carboxylique aliphatique, de sulfo-monomère, contenant un groupe métal-sulfonate dans la partie aromatique d'un acide di-carboxylique aromatique, et un glycol aliphatique ou cycloaliphatique.

2. Film selon la revendication 1, **caractérisé en ce que** la composante II est un produit de condensation des monomères suivants et/ou de leurs dérivés susceptibles de former des polymères :
A) 65 à 95 % en mole d'acide isophtalique ;
B) 0 à 30 % en mole d'au moins d'acide di-carboxylique aliphatique de formule
HOOC(CH₂)ₙCOOH
dans laquelle n est compris dans la plage de 1 à 11 ;
C) 5 à 15 % en mole d'au moins un sulfo-monomère contenant un groupe sulfonate de métalalcalin dans la partie aromatique d'un acide di-carboxylique ;
D) un glycol aliphatique ou cyclo-aliphatique co-polymérisable comportant 2 à 11 atomes de carbone en quantité stoechiométrique nécessaire pour l'obtention de 100 % en mole de condensat ; les pourcentages étant donnés respectivement par rapport à la quantité totale de monomères formant la composante II.

3. Film selon la revendication 1 ou 2, **caractérisé en ce que** le ratio des composantes I et II est compris dans la plage I :II = 10 :90 jusqu'à I :II = 95 :5.

4. Film selon l'une quelconque des revendications 1 à 3, **caractérisé en ce que** la couche de couverture présente une épaisseur de 0,2 à 6 µm.

5. Film selon l'une quelconque des revendications 1 à 4, **caractérisé en ce qu'**il est bicouche et composé d'une couche de base et d'une couche de couverture.

6. Film selon l'une quelconque des revendications 1 à 4, **caractérisé en ce qu'**il est tricouche et est composé d'une couche de base et respectivement d'une couche de couverture sur chaque face de la couche de base.

7. Film selon la revendication 5 ou 6, caractérisé en ce la couche de couverture contient une charge minérale.

8. Film selon l'une quelconque des revendications 1 à 7, **caractérisé en ce qu'**il est métallisé au moins sur une face ou revêtu de SiOₓ, AlₓO_{y}, alcool éthylvinylique, PVDC, silicagel, polyester hydrophile, vinylacétate, polyvinylacétate, polyuréthane, sels alcalins ou alcalins terreux d'acides gras, copolymère de butadiène, acide (méth)acrylique ou ses esters ou avec de la silicone.

9. Procédé de préparation d'un film selon la revendication 1, dans lequel les polyesters en fusion correspondant aux compositions des couches de bases et de couverture sont amenés vers une buse multicouche, extrudés à travers la buse sur un rouleau de refroidissement et le pré-film ainsi obtenu est ensuite étiré de façon biaxiale et fixé par effet de chaleur, le(s) polyester(s) en fusion pour la couche de base et/ou pour le ou les couches de couvertures contenant au moins un stabilisant UV et le polyester en fusion pour la ou les couches de couverture contenant un mélange et/ou un blend de deux composantes I et II, la composante I étant un homopolymère de polyéthylène téréphtalate ou un copolymère de polyéthylène téréphtalate ou un mélange de homopolymères de polyéthylène téréphtalate ou de copolymères de polyéthylène téréphtalate, et la composante II étant un polymère contenant au moins un groupe sulfonate.

10. Utilisation d'un film selon la revendication 1, à titre de revêtement d'intérieur, pour des indicateurs, des vitrages de protection, dans le secteur de l'éclairage, dans la construction de magasins et d'étagères, à titre d'article publicitaire, comme matériau de contre-collage, pour des serres, des préaux, des revêtements extérieurs, des protections dans le domaine du bâtiment, à titre de profilé pour publicités lumineuses, mât d'ombrage ou dans des applications électriques.
